# EUROPEAN PATENT APPLICATION

(11) **EP 3 540 180 A1**
(43) Date of publication of application: **18.09.2019**
(21) Application number: 18461535.9
(22) Date of filing: 14.03.2018
(51) Int. Cl.: F01D 11/00, F01D 5/06, F01D 5/08, F01D 11/02, F01D 11/10, F01D 11/12, F01D 11/20, F16J 15/00, F01D 25/24, F01D 9/06

(54) **INTER-STAGE CAVITY PURGE DUCTS**

(71) Applicant: General Electric Company, Schenectady, NY 12345 (US)
(72) Inventor: BERDOWSKI, Tomasz Edward, 02-256 Warszawa (PL); MALEK, Artur Miroslaw, 02-256 Warszawa (PL); RYKALA, Marcin Piotr, 02-256 Warszawa (PL); KICIAK, Adam, 02-256 Warszawa (PL); MANOHARAN, Mahendran, 560066 Bangalore (IN); SCHABOWSKI, Zbigniew Michal, 85748 Bayern (DE); KAWALKOWSKI, Marcin, deceased (PL)
(74) Representative: Openshaw & Co.

(57) **Abstract**

An inter-stage seal assembly (128) includes annular seal land (206) mounted inwardly of and to seal support ring (204) and pre-swirlers (88,252) in purge duct (70) extending through land (206). Purge duct (70) may be bounded by spaced apart duct walls (76, 78) and pre-swirlers (88,252) include turning vanes (86) in outer exhaust section (80). Purge duct (70) may include plurality of enclosed purge passages (250) circumferentially disposed around engine centerline (12) and pre-swirlers (88,252) include curved section (252) in passages (250). Seal land (206) may be bifurcated (208) having forward and aft seal land sections (220, 222) and purge duct (70) may include purge duct inlet (96) located therebetween. Seal support ring (204) may include flange (94) attached to or integrally and monolithically formed with inner platform (30) attached to nozzle vanes (26) extending across turbine flowpath (42) and exhaust section (80) may be flush with platform (30). Labyrinth seal teeth (210) mounted to turbine rotor (56) may engage land (206), purge duct (70) may extend between annular inlets and outlets (96, 98), inlet (96) may be between adjacent couple (137) of seal teeth (210).

## Description

### BACKGROUND OF THE INVENTION

### TECHNICAL FIELD

The present invention relates generally to a gas turbine engine seal assembly between turbine stator vanes and blades and, more particularly, for sealing or limiting losses due to leakage between a hot gas path and an inter-stage cavity.

### BACKGROUND INFORMATION

In a typical gas turbine engine, air is compressed in a compressor and mixed with fuel and ignited in a combustor for generating hot combustion gases. The gases flow downstream through a high pressure turbine (HPT) having one or more stages including one or more HPT turbine nozzles, shrouds, and rows of HPT rotor blades. The gases then flow to a low pressure turbine (LPT) having one or more stages of respective LPT turbine nozzles and LPT rotor blades. Ingestion of hot working gas from a hot gas path into inter-stage cavities between disks of adjacent LPT stages can reduce engine performance and efficiency. This ingestion may also reduce service life and/or cause failure of the components in and around the inter-stage cavities.

It is desirable to minimize or eliminate turbine inter-stage seal leakage path losses and prevent or minimize ingestion of hot working gas from a hot gas path into inter-stage cavities between disks of adjacent LPT stages. It is desirable to minimize losses due to interaction between leakage flows and main gas path on the blade airfoil.

### BRIEF DESCRIPTION OF THE INVENTION

A gas turbine engine annular turbine inter-stage seal assembly includes an annular seal land mounted radially inwardly of and to a seal support ring, an annular inter-stage cavity purge duct extending radially through the annular seal land, and pre-swirlers for increasing circumferential velocity of purge flow exiting the purge duct. The purge duct may be bounded by spaced apart annular duct walls, include a radially outer exhaust section bounded by radially spaced apart duct wall end sections of the spaced apart annular duct walls respectively, and the pre-swirlers may include turning vanes in the radially outer exhaust section.

The annular seal land may be bifurcated and include annular forward and aft seal land sections, a forward sealing surface of the annular forward seal land section having a forward sealing radius, an aft sealing surface of the annular aft seal land section having an aft sealing radius, and the forward sealing radius may be larger or smaller than the aft sealing radius.

The purge duct may include a purge duct inlet axially located between the forward and aft seal land sections. The assembly seal support ring may be connected or attached to and extend radially inwardly from a gas turbine engine turbine nozzle. The seal support ring may include an annular seal ring flange attached to or integrally and monolithically formed with an inner platform attached to nozzle vanes extending radially across a portion of a turbine flowpath through the turbine nozzle. The exhaust section may be flush with the platform.

The assembly may further include axially spaced apart labyrinth seal teeth sealing and engaging the seal land and mounted to a turbine rotor, the purge duct extending radially between annular purge duct inlets and outlets of the purge duct, and the purge duct inlet being located radially outwardly of the annular seal land and axially between an adjacent couple of the labyrinth seal teeth. The annular seal land may be bifurcated and include annular forward and aft seal land sections, a forward sealing surface of the annular forward seal land section may have a forward sealing radius, an aft sealing surface of the annular aft seal land section may have an aft sealing radius, the forward sealing radius may be larger or smaller than the aft sealing radius, the axially spaced apart labyrinth seal teeth include first, second, and third seal teeth, the first and second seal teeth are in sealing engagement with the forward seal land section, and the third seal tooth in sealing engagement with the annular aft seal land section. The purge duct inlet may be axially located between the second and third teeth and between the forward and aft seal land sections.

The seal support ring may include an annular seal ring flange attached to or integrally and monolithically formed with an inner platform attached to nozzle vanes extending radially across a portion of a turbine flowpath through the turbine nozzle, the exhaust section may be flush with the platform, a forward or upstream angel wing discourager may be located between the turbine flowpath and the annular seal land and include an annular angel wing land extending aft or downstream from a rim upstream of the nozzle, and the angel wing land may be radially disposed between and in sealing relationship with forwardly or upstream extending radially outer discourager land and radially inner discourager seal plate attached to the seal support ring.

A gas turbine engine turbine assembly includes first and second stage disks including first and second stage webs extending radially outwardly from first and second stage bores to first and second stage rims respectively, first and second rows of first and second stage turbine blades mounted in the first and second stage rims respectively and extending radially across a turbine flowpath, a row of nozzle vanes axially disposed between the first and second rows of first and second stage turbine blades, a seal support ring located radially inwardly of and connected to the row of nozzle vanes, an inter-stage seal disposed in an inter-stage cavity between the first and second stage disks, the inter-stage seal including an annular seal land mounted radially inwardly of and to the seal support ring, an annular inter-stage cavity purge duct extending radially through the annular seal land, the purge duct bounded by spaced apart annular duct walls, the purge duct including a radially outer exhaust section bounded by radially spaced apart duct wall end sections of the spaced apart annular duct walls respectively, and turning vanes in the radially outer exhaust section.

The purge duct may be operable to flow a curtain stream through an aft or downstream inter-stage exit of the inter-stage cavity, the curtain stream having an injected relative flow velocity vector (W2S) at the inter-stage exit, a main flowpath gas velocity (VA) in the turbine flowpath at the aft or downstream inter-stage exit having a main flowpath gas relative velocity vector (W2), and an angular difference (BD) between the injected flow relative velocity vector (W2S) and the main flowpath gas relative velocity vector (W2) being substantially or nearly zero or up to about five degrees.

The purge duct may include a plurality of individual enclosed purge passages circumferentially disposed around an engine centerline and the pre-swirlers may include a radially outer curved section in each of the enclosed purge passages.

### BRIEF DESCRIPTION OF THE DRAWINGS

The subject matter which is regarded as the invention is particularly pointed out and distinctly claimed in the concluding part of the specification. The invention, in accordance with preferred and exemplary embodiments, together with further objects and advantages thereof, is described in the following detailed description taken in conjunction with the accompanying drawings in which:
FIG. 1 is a schematical longitudinal cross-sectional view illustration of a portion of an exemplary aircraft gas turbine engine low pressure turbine section with an inter-stage cavity purge duct.
FIG. 2 is an enlarged cross-sectional view illustration of an inter-stage seal in an inter-stage cavity and the inter-stage cavity purge duct illustrated in FIG. 1.
FIG. 2A is an enlarged cross-sectional view illustration of an alternative inter-stage seal and inter-stage cavity purge duct to the embodiments illustrated in FIG. 2.
FIG. 3 is a schematical perspective view illustration of the inter-stage cavity purge duct illustrated in FIG. 2.
FIG. 4 is an enlarged circumferential looking schematical perspective view illustration of the inter-stage cavity purge air duct illustrated in FIG. 2.
FIG. 5 is diagrammatic illustration of velocity triangles for a curtain stream exiting the inter-stage cavity and a main flowpath gas velocity V in a turbine flowpath of the low pressure turbine section illustrated in FIG. 1.
FIG. 6 is a schematical perspective aft looking forward view illustration an alternative inter-stage cavity purge duct with a plurality purge holes.
FIG. 7 is a schematical perspective radially outwardly looking view illustration of an inlet to one of the holes illustrated in FIG. 6.
FIG. 8 is a schematical partially cut away aft looking forward view illustration of one of the holes illustrated in FIG. 6.

### DETAILED DESCRIPTION OF THE INVENTION

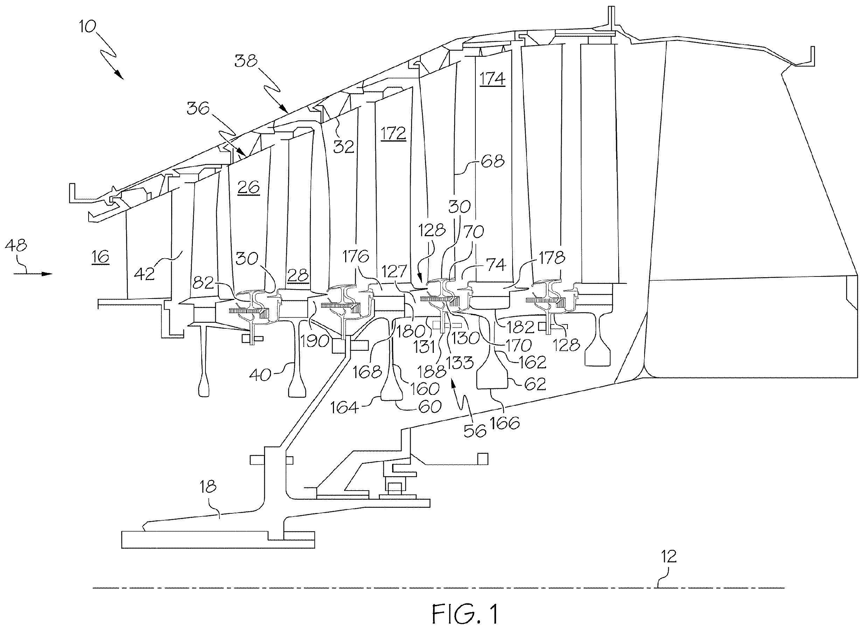

Illustrated schematically in FIG. 1 is a partial cutaway view of a highly simplified schematic illustration of an exemplary gas turbine engine low pressure turbine section 10 arranged substantially concentrically about an engine centerline 12 and aft of a high pressure turbine section 16. The low pressure turbine section 10 rotates a fan section (not shown) of the engine and other components through a rotor shaft (not shown). The turbine section 10 includes alternating annular rows of nozzle vanes 26 and rotor blades 28, the vanes 26 and blades 28 being airfoils for reacting the hot gas stream. The nozzle vanes 26 are attached to a radially outer band 32 and a radially inner ring or platform 30 to form non-rotating annular nozzle stages 36. The nozzle stages are suitably attached to and supported by an annular outer engine casing 38. Each of the rotor blades 28 is attached at its radially inner end to periphery of a disk 40 which is connected to the rotor shaft 18.

The disks 40 include first and second stage disks 60, 62 having first and second stage webs 160, 162 extending radially outwardly from first and second stage bores 164, 166 to first and second stage rims 168, 170 respectively. The rotor blades 28 include first and second stage turbine blades 172, 174 extending radially across a turbine flowpath 42 containing hot turbine gas flow 48. The first and second stage turbine blades 172, 174 include first and second stage roots 176, 178 disposed in first and second stage slots 180, 182 extending axially through the first and second stage rims 168, 170 respectively. First and second annular disk extensions 131, 133 extend axially towards each other from the first and second stage bores 164, 166 of the first and second stage disks 60, 62 respectively. A row of the nozzle vanes 26 are axially disposed between rows of the first and second stage turbine blades 172, 174.

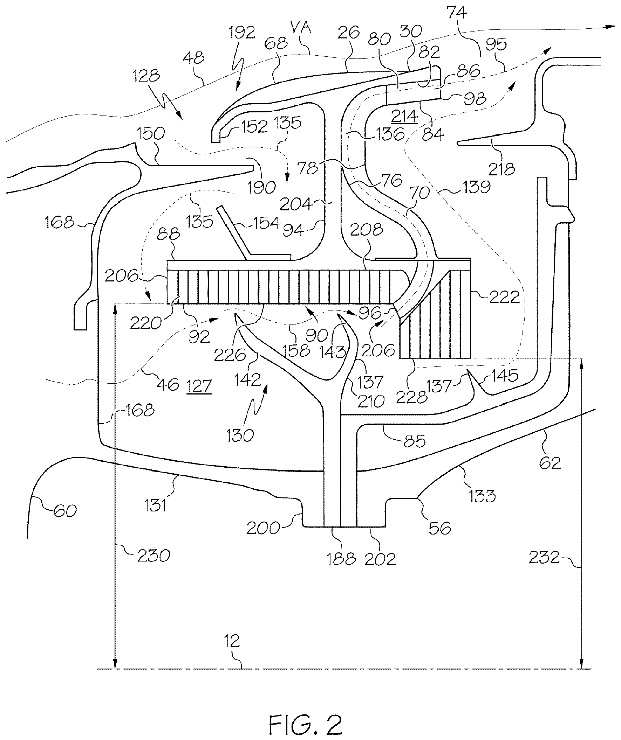

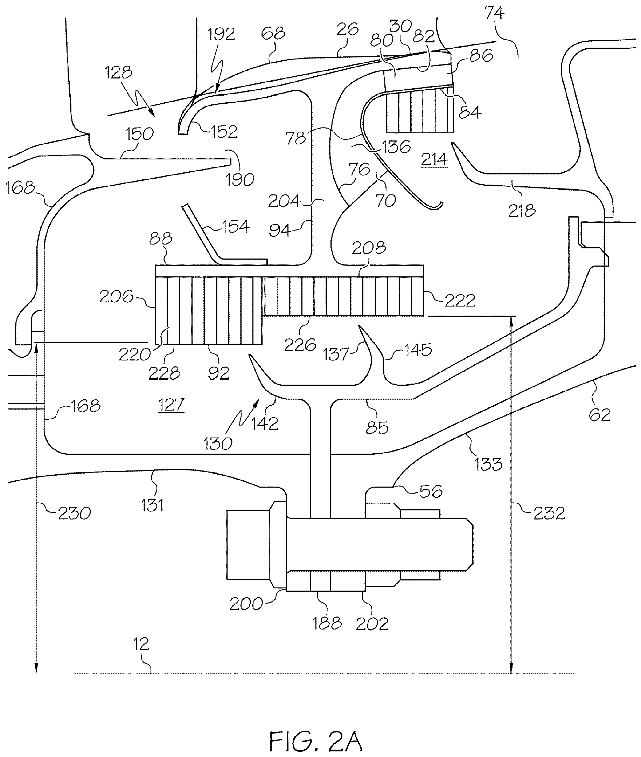

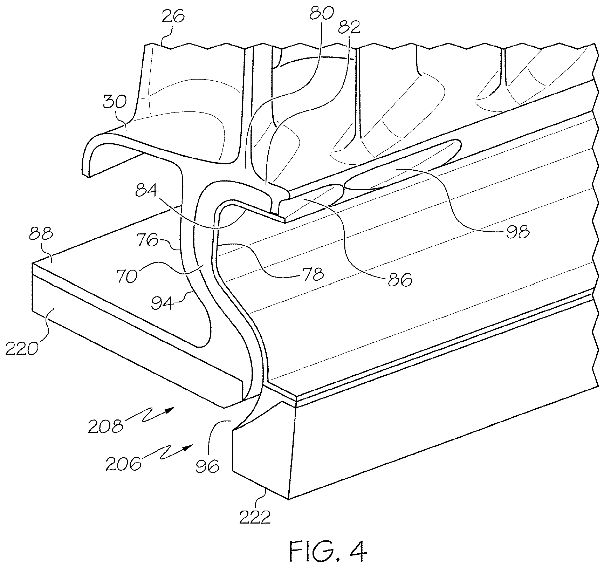

Referring to FIGS. 2 and 4, an inter-stage seal assembly 128 includes an inter-stage seal 130 disposed in the inter-stage cavity 127 axially between the first and second stage disks 60, 62 and the first and second stage turbine blades 172, 174. The inter-stage seal 130 is a labyrinth seal and includes a seal support ring 204 connected or attached to and extending radially inwardly from the second stage nozzle 68. An annular seal land 206 is mounted radially inwardly of and to the seal support ring 204.

The seal land 206 includes a radially inner abradable shroud assembly 90 having an abradable annular honeycomb seal member 92 fixedly attached to the annular seal support ring 204 such as by brazing, welding, or other suitable means well known in the art. Additive manufacturing or 3D printing may be used to manufacture the seal land. The seal support ring 204 includes an annular seal ring flange 94 extending radially inwardly from the inner platform 30 to an annular ring wall 88. The abradable shroud assembly 90 is attached to the annular ring wall 88. The seal support ring 204 may be integrally and monolithically formed with the inner platform 30 attached to the nozzle vanes 26.

The inter-stage seal 130 includes labyrinth seal teeth 210 sealing and engaging the seal land 206 and mounted to turbine rotor 56. Two of the labyrinth seal teeth 210 may be mounted to turbine rotor 56 by an annular teeth support flange 188. The teeth support flange 188 is bolted to the turbine rotor 56 between annular first and second extension flanges 200, 202 at distal ends of the first and second annular disk extensions 131, 133 respectively.

Cooling flow 46 from the downstream first stage slots 180 of the first stage rim 168 flows into the inter-stage cavity 127. Hot leakage flow 135 from the hot turbine gas flow 48 of the turbine flowpath 42 leaks into a forward or upstream buffer cavity 190 between the turbine flowpath 42 and the annular seal land 206 through a forward or upstream angel wing discourager 192 and then into the inter-stage cavity 127. The forward or upstream angel wing discourager 192 may include an annular angel wing land 150 extending aft or downstream from the first stage rim 168 and may be radially disposed between and in sealing relationship with forwardly or upstream extending radially outer discourager land 152 and radially inner discourager seal plate 154 attached to the seal support ring 204.

The cooling flow 46 combines with the leakage flow 135 forming an inter-stage cavity exhaust flow 158. The cavity exhaust flow 158 is split into a purge duct airflow 136 through a purge duct 70 and a duct bypass airflow 139 which bypasses and flows around the purge duct 70. The purge duct airflow 136 is taken from between an adjacent couple 137 of the labyrinth seal teeth 210 inter-stage seal 130. The duct bypass airflow 139 flows radially out of the inter-stage cavity, through an aft or downstream buffer cavity 214 and around an aft or downstream discourager seal 218 into the turbine flowpath 42. The purge duct airflow 136 and the duct bypass airflow 139 are exhausted into the hot turbine gas flow 48 in the turbine flowpath 42 aft or downstream of the nozzle vanes 26 of the second stage nozzle 68 through an aft or downstream inter-stage exit 74 of the inter-stage cavity 127.

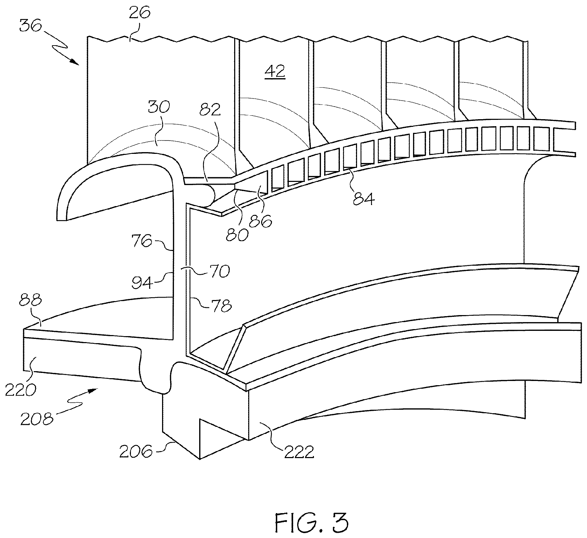

The annular inter-stage cavity purge duct 70 extends radially through the annular seal land 206 and between the inter-stage cavity 127 and the platform 30 of the nozzle vane 26. The embodiments of the annular purge duct 70 illustrated in FIGS. 2-4 is bounded by spaced apart first and second annular duct walls 76, 78. This annular purge duct 70 includes a radially outer exhaust section 80 bounded by radially spaced apart first and second duct wall end sections 82, 84. Turning vanes 86 in the radially outer exhaust section 80 operate as pre-swirlers or inducers to increase circumferential velocity of the purge flow and minimize mixing losses in the turbine flowpath 42 (reducing angular mismatch of the main flowpath and purge flow at the inlet to the downstream rotor). The turning vanes 86 are designed to increase circumferential velocity of the purge flow, thus, minimizing mixing losses in the turbine flowpath 42 (reducing angular mismatch of the main flowpath and purge flow at the inlet to the downstream rotor). The radially outer exhaust section 80 may be flush with the platform 30 and may be directly connected or attached to the radially inner ring or the platform 30 as illustrated in FIG. 2.

The purge duct 70 may extend radially between annular purge duct inlets and outlets 96, 98. The purge duct inlet 96 may be located radially outwardly of the annular seal land 206 and disposed through the seal ring flange 94 of the seal support ring 204 as illustrated in FIGS. 2 and 4. The inter-stage cavity exhaust flow 158 is split into a purge duct airflow 136 through the purge duct 70 and the duct bypass airflow 139 which bypasses and flows around the purge duct 70. The purge duct airflow 136 is taken through the purge duct inlet 96 located axially between an adjacent couple 137 of the labyrinth seal teeth 210 teeth inter-stage seal 130.

The inter-stage seal 130 illustrated herein includes three axially spaced apart labyrinth seal teeth 210 denoted as first, second, and third seal teeth 142, 143, and 145 respectively. The purge duct airflow 136 is taken through the purge duct inlet 96 located axially between the second and third seal teeth 143, 145. As illustrated herein, the inter-stage seal 130 may include an annular bifurcated seal land 208 having annular forward and aft seal land sections 220, 222. A forward sealing surface 226 of the annular forward seal land section 220 has a larger, illustrated in FIG. 2, or a smaller, illustrated in FIG. 2A, forward sealing radius 230 than an aft sealing radius 232 of an aft sealing surface 228 of the annular aft seal land section 222. The radii are measured from and normal to the engine centerline 12. The first and second seal teeth 142 and 143 are in sealing engagement with the forward sealing surface 226 of the annular forward seal land section 220, and the third seal tooth 145 is in sealing engagement with the aft sealing surface 228 of the annular aft seal land section 222.

An annular retaining plate 85, upstream of and proximate to the second stage disk 62, axially retains the second stage roots 178 in the second stage slots 182 extending axially through the second stage rims 170. The retaining plate 85 carries and supports the third seal tooth 145 and together with the teeth support flange 188 is bolted to the turbine rotor 56 between the first and second extension flanges 200, 202 at the distal ends of the first and second annular disk extensions 131, 133 respectively.

A curtain stream 95 is formed from the purge duct airflow 136 and the duct bypass airflow 139. The curtain stream 95 is primarily formed and powered by the purge duct airflow 136 acted upon by the purge duct outlet 98 and, more particularly, by the spaced apart annular duct walls 76, 78 of the purge duct outlet 98. The curtain stream 95 flows through the aft or downstream inter-stage exit 74 of the inter-stage cavity 127 to mix and flow substantially parallel or at another optimized angle with the hot turbine gas flow 48 having a main flowpath gas velocity VA in the turbine flowpath 42.

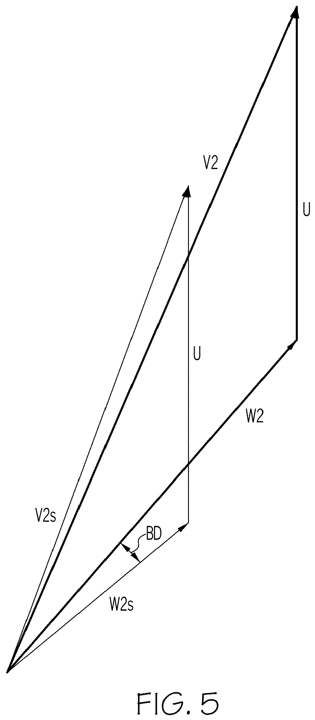

Velocity triangles for the curtain stream 95 and the main flowpath gas velocity VA in the turbine flowpath 42 are illustrated in FIG. 5. A velocity vector triangle may be defined as follows: U, blade tangential velocity vector (blade speed); V, relative velocity vector of the fluid after contact with rotor in an absolute frame of reference; W, tangential component of V (absolute velocity), called whirl velocity or a velocity vector in relative rotor frame of reference. Referring to FIGS. 2 and 5, the purge duct 70 is designed and operable to flow the curtain stream 95 through the aft or downstream inter-stage exit 74 with an injected relative flow velocity vector W2S and injected absolute velocity vector V2S. The main flowpath gas velocity VA in the turbine flowpath 42 at the aft or downstream inter-stage exit 74 has a main flowpath gas relative velocity vector W2 and a main flowpath gas absolute velocity vector V2. The curtain stream 95 flows out of or exits the downstream inter-stage exit 74 substantially parallel to the main flowpath gas velocity VA, which stratifies the two flows and is intended to shield one from the other. This means that an angular difference BD between the injected flow relative velocity vector W2S and the main flowpath gas relative velocity vector W2 is substantially or nearly zero or up to about five degrees. In other embodiments, the angular difference BD may be in a range of +/- ten degrees.

The inter-stage seal assembly and inter-stage seal with the purge duct disposed in the inter-stage cavity disclosed herein may be used in various types of gas turbine engine turbine assemblies or gas turbine engine turbines including high pressure, low pressure and intermediate pressure turbines.

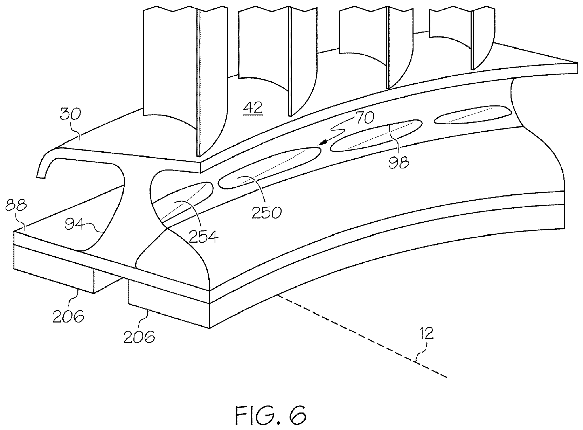

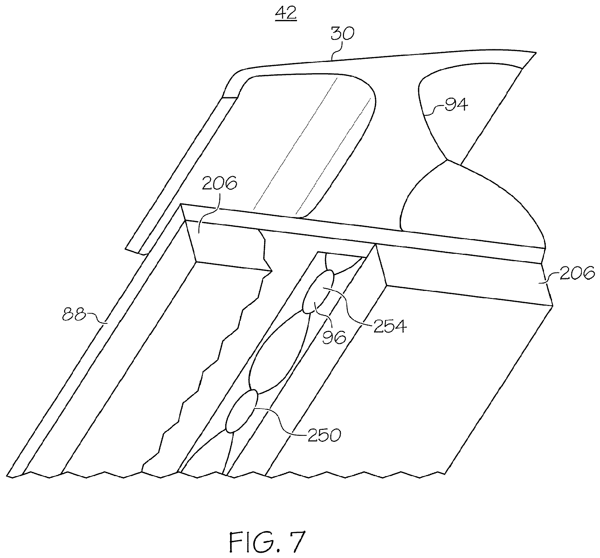

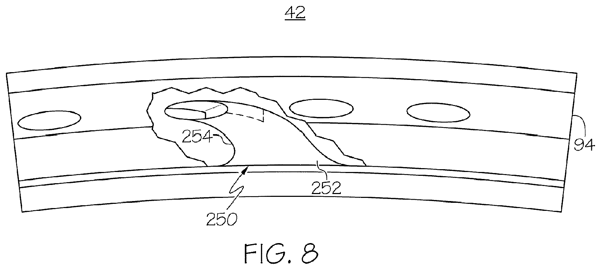

The embodiments of the annular purge duct 70 illustrated in FIGS. 6-8 include a plurality of individual enclosed purge passages 250 circumferentially disposed around the engine centerline 12. Each of the enclosed purge passages 250 includes a curved section 252 which operates as a pre-swirler to increase circumferential velocity of the purge flow and minimize mixing losses in the turbine flowpath 42. The curved section 252 is designed to increase circumferential velocity of the purge flow, thus, minimizing mixing losses in the turbine flowpath 42.

The purge passages 250 may extend radially between purge duct inlets and outlets 96, 98. The purge duct inlets 96 may be located radially outwardly of the annular seal land 206 and disposed through the seal ring flange 94 of the seal support ring 204. The purge passages 250 may be holes 254 extending through the seal support ring 204 between the purge duct inlets and outlets 96, 98. In a more particular embodiment of the purge passages 250, the holes 254 may extend through the seal ring flange 94 of the seal support ring 204.

While there have been described herein what are considered to be preferred and exemplary embodiments of the present invention, other modifications of the invention shall be apparent to those skilled in the art from the teachings herein and, it is therefore, desired to be secured in the appended claims all such modifications as fall within the true spirit and scope of the invention. Accordingly, what is desired to be secured by Letters Patent of the United States is the invention as defined and differentiated in the following claims.

Parts List:
10. gas turbine engine turbine assembly /
   low pressure turbine section
12. engine centerline
16. high pressure turbine section
18. rotor shaft
26. nozzle vanes
28. rotor blades
30. inner ring or platform
32. outer band
36. nozzle stages
38. outer engine casing
40. disk
42. turbine flowpath
46. cooling flow
48. hot turbine gas flow
56. turbine rotor
60. first stage disks
62. second stage disks
68. second stage nozzle
70. inter-stage cavity purge duct
74. aft or downstream inter-stage exit
76. first duct walls
78. second duct walls
80. outer exhaust section
82. first duct wall end sections
84. second duct wall end sections
85. retaining plate
86. turning vanes
88. ring wall
90. inner abradable shroud assembly
92. honeycomb seal member
94. seal ring flange
95. curtain stream
96. purge duct inlets
98. purge duct outlets
127. inter-stage cavity
128. inter-stage seal assembly
130. inter-stage seal
131. first annular disk extensions
133. second annular disk extensions
135. hot leakage flow
136. purge duct airflow
137. adjacent couple
139. duct bypass airflow
142. first seal teeth
143. second seal teeth
145. third seal teeth
150. angel wing land
152. outer discourager land
154. inner discourager seal plate
158. inter-stage cavity exhaust flow
160. first stage webs
162. second stage webs
164. first stage bores
166. second stage bores
168. first stage rims
170. second stage rims
172. first stage turbine blades
174. second stage turbine blades
176. first stage roots
178. second stage roots
180. first stage slots
182. second stage slots
188. teeth support flange
190. forward or upstream buffer cavity
192. forward or upstream angel wing discourager
200. first extension flange
202. second extension flange
204. seal support ring
206. seal land
208. bifurcated seal land
210. labyrinth seal teeth
214. aft or downstream buffer cavity
218. aft or downstream discourager seal
220. forward seal land section
222. aft seal land section
226. forward sealing surface
228. aft sealing surface
230. forward sealing radius
232. aft sealing radius
250. purge passages
252. curved section
254. holes
BD B angular difference in relative (rotor) reference frame
U B blade speed
W B relative velocity vector in rotor reference frame
VA B main flowpath gas velocity
W2S B injected flow relative velocity vector in rotor reference frame
V2S B injected flow absolute velocity vector
W2 B main flowpath gas relative velocity vector in rotor reference frame
V2 B main flowpath gas absolute velocity vector

## Claims

1. A gas turbine engine annular turbine inter-stage seal assembly (128) comprising:
an annular seal land (206) mounted radially inwardly of and to a seal support ring (204),
an annular inter-stage cavity purge duct (70) extending radially through the annular seal land (206), and
pre-swirlers (88,252) for increasing circumferential velocity of purge flow exiting the purge duct (70).

2. The assembly (128) as claimed in claim 1, further comprising:
the purge duct (70) bounded by spaced apart annular duct walls (76, 78),
the purge duct (70) including a radially outer exhaust section (80) bounded by radially spaced apart duct wall end sections (82, 84) of the spaced apart annular duct walls (76, 78) respectively, and
the pre-swirlers (88) including turning vanes (86) in the radially outer exhaust section (80).

3. The assembly (128) as claimed in claim 2, further comprising:
the annular seal land (206) being bifurcated (208) and including annular forward and aft seal land sections (220, 222),
a forward sealing surface (226) of the annular forward seal land section (220) having a forward sealing radius (230),
an aft sealing surface (228) of the annular aft seal land section (222) having an aft sealing radius (232),
the forward sealing radius (230) being larger or smaller than the aft sealing radius (232), and
the purge duct (70) including a purge duct inlet (96) axially located between the forward and aft seal land sections (220, 222).

4. The assembly (128) as claimed in claim 3, further comprising:
the seal support ring (204) connected or attached to and extending radially inwardly from a gas turbine engine turbine nozzle,
the seal support ring (204) including an annular seal ring flange (94) attached to or integrally and monolithically formed with an inner platform (30) attached to nozzle vanes (26) extending radially across a portion of a turbine flowpath (42) through the turbine nozzle.

5. The assembly (128) as claimed in claim 2, further comprising:
axially spaced apart labyrinth seal teeth (210) sealing and engaging the seal land (206) and mounted to a turbine rotor (56),
the purge duct (70) extending radially between annular purge duct inlets and outlets (96, 98) of the purge duct (70),
the purge duct inlet (96) being located radially inwardly of the annular seal land (206) and axially between an adjacent couple (137) of the labyrinth seal teeth (210),
the annular seal land (206) being bifurcated (208) and including annular forward and aft seal land sections (220, 222),
a forward sealing surface (226) of the annular forward seal land section (220) having a forward sealing radius (230),
an aft sealing surface (228) of the annular aft seal land section (222) having an aft sealing radius (232),
the forward sealing radius (230) being larger or smaller than the aft sealing radius (232),
the axially spaced apart labyrinth seal teeth (210) including first, second, and third seal teeth (142, 143, 145),
the first and second seal teeth (142, 143) in sealing engagement with the forward seal land section (220),
the third seal tooth (145) in sealing engagement with the annular aft seal land section (222), and
the purge duct inlet (96) being axially located between the second and third teeth (143, 145) and between the forward and aft seal land sections (220, 222).

6. The assembly (128) as claimed in claim 5, further comprising:
the seal support ring (204) including an annular seal ring flange (94) attached to or integrally and monolithically formed with an inner platform (30) attached to nozzle vanes (26) extending radially across a portion of a turbine flowpath (42) through the turbine nozzle,
the exhaust section (80) being flush with the platform (30),
a forward or upstream angel wing discourager (192) between the turbine flowpath (42) and the annular seal land (206),
the forward or upstream angel wing discourager (192) including an annular angel wing land (150) extending aft or downstream from a rim (168) upstream of the nozzle (68), and
the angel wing land (150) radially disposed between and in sealing relationship with forwardly or upstream extending radially outer discourager land (152) and radially inner discourager seal plate (154) attached to the seal support ring (204).

7. The assembly (128) as claimed in claim 1, further comprising the purge duct (70) including a plurality of individual enclosed purge passages (250) circumferentially disposed around an engine centerline (12) and the pre-swirlers (88) including a radially outer curved section (252) in each of the enclosed purge passages (250).

8. A gas turbine engine turbine assembly (10) comprising:
first and second stage disks (60, 62) including first and second stage webs (160, 162) extending radially outwardly from first and second stage bores (164, 166) to first and second stage rims (168, 170) respectively,
first and second rows of first and second stage turbine blades (172, 174) mounted in the first and second stage rims (168, 170) respectively and extending radially across a turbine flowpath (42),
a row of nozzle vanes (26) axially disposed between the first and second rows of first and second stage turbine blades (172, 174),
a seal support ring (204) located radially inwardly of and connected to the row of nozzle vanes (26),
an inter-stage seal (130) disposed in an inter-stage cavity (127) between the first and second stage disks (60, 62),
the inter-stage seal (130) including an annular seal land (206) mounted radially inwardly of and to the seal support ring (204),
an annular inter-stage cavity purge duct (70) extending radially through the annular seal land (206), and
swirlers (88,252) for increasing circumferential velocity of purge flow exiting the purge duct (70).

9. The assembly (10) as claimed in claim 8, further comprising:
the purge duct (70) bounded by spaced apart annular duct walls (76, 78),
the purge duct (70) including a radially outer exhaust section (80) bounded by radially spaced apart duct wall end sections (82, 84) of the spaced apart annular duct walls (76, 78) respectively, and
the pre-swirlers (88) including turning vanes (86) in the radially outer exhaust section (80).

10. The assembly (10) as claimed in claim 9, further comprising:
axially spaced apart labyrinth seal teeth (210) sealing and engaging the seal land (206) and connected to the first and second stage disks (60, 62),
the purge duct (70) extending radially between annular purge duct inlets and outlets (96, 98) of the purge duct (70),
the purge duct inlet (96) being located radially inwardly of the annular seal land (206) and axially between an adjacent couple (137) of the labyrinth seal teeth (210),

11. The assembly (10) as claimed in claim 10, further comprising:
the purge duct (70) operable to flow a curtain stream (95) through an aft or downstream inter-stage exit (74) of the inter-stage cavity (127),
the curtain stream (95) having an injected relative flow velocity vector (W2S) at the inter-stage exit (74),
a main flowpath gas velocity (VA) in the turbine flowpath (42) at the aft or downstream inter-stage exit (74) having a main flowpath gas relative flow velocity vector (W2), and
an angular difference (BD) between the injected relative flow velocity vector (W2S) and the main flowpath gas relative flow velocity vector (W2) being substantially or nearly zero or up to about five degrees.

12. The assembly (10) as claimed in claim 8, further comprising the purge duct (70) including a plurality of individual enclosed purge passages (250) circumferentially disposed around an engine centerline (12) and the pre-swirlers (88) including a radially outer curved section (252) in each of the enclosed purge passages (250).

13. The assembly (10) as claimed in claim 12, further comprising:
the annular seal land (206) being bifurcated (208) and including annular forward and aft seal land sections (220, 222),
a forward sealing surface (226) of the annular forward seal land section (220) having a forward sealing radius (230),
an aft sealing surface (228) of the annular aft seal land section (222) having an aft sealing radius (232),
the forward sealing radius (230) being larger or smaller than the aft sealing radius (232),
the seal support ring (204) including an annular seal ring flange (94) attached to or integrally and monolithically formed with an inner platform (30) attached to the nozzle vanes (26),
axially spaced apart labyrinth seal teeth (210) sealing and engaging the seal land (206) and connected to the first and second stage disks (60, 62),
the purge duct (70) extending radially between annular purge duct inlets and outlets (96, 98) of the purge duct (70), and
the purge duct inlet (96) being located radially inwardly of the annular seal land (206) and axially between an adjacent couple (137) of the labyrinth seal teeth (210).

14. The assembly (10) as claimed in claim 13, further comprising:
the annular seal land (206) being bifurcated (208) and including annular forward and aft seal land sections (220, 222),
a forward sealing surface (226) of the annular forward seal land section (220) having a forward sealing radius (230),
an aft sealing surface (228) of the annular aft seal land section (222) having an aft sealing radius (232),
the forward sealing radius (230) being larger or smaller than the aft sealing radius (232),
the axially spaced apart labyrinth seal teeth (210) including first, second, and third seal teeth (142, 143, 145),
the first and second seal teeth (142, 143) in sealing engagement with the forward seal land section (220),
the third seal tooth (145) in sealing engagement with the annular aft seal land section (222), and
the purge duct inlet (96) being axially located between the second and third teeth (143, 145) and between the forward and aft seal land sections (220, 222).

15. The assembly (10) as claimed in claim 12, further comprising:
the purge duct (70) operable to flow a curtain stream (95) through an aft or downstream inter-stage exit (74) of the inter-stage cavity (127),
the curtain stream (95) having an injected relative flow velocity vector (W2S) at the inter-stage exit (74),
a main flowpath gas velocity (VA) in the turbine flowpath (42) at the aft or downstream inter-stage exit (74) having a main flowpath gas relative flow velocity vector (W2), and
an angular difference (BD) between the injected relative flow velocity vector (W2S) and the main flowpath gas relative flow velocity vector (W2) being substantially or nearly zero or up to about five degrees.
